# EUROPÄISCHE PATENTSCHRIFT

(11) **EP 1 310 151 B1**
(45) Veröffentlichungstag und Bekanntmachung des Hinweises auf die Patenterteilung: **05.09.2007**
(21) Anmeldenummer: 02102482.3
(22) Anmeldetag: 24.10.2002
(51) Int. Cl.: A01F 12/46

(54) **Fördereinrichtung zur Befüllung eines Korntranks eines Mähdreschers und Überkehrförderer**
Conveying device for the filling of a grain tank of a combine and conveyor for the return of tailings
Convoyeur pour remplir le réservoir de grains d'une moissonneuse-batteuse et convoyeur de renvoi des résidues

(30) Priorität: 31.10.2001 DE 10153790
(43) Veröffentlichungstag der Anmeldung: 14.05.2003
(73) Patentinhaber: DEERE & COMPANY, Moline, Illinois 61265-8098 (US)
(72) Erfinder: Dauenhauer, Bruno, 66509, Rieschweiler (DE); Wendling, Ignatz, 66482, Zweibrücken (DE); Büchner, Benjamin, 66503, Dellfeld (DE); Hirsch, Walter, 66459, Kirkel/Limbach (DE)
(74) Vertreter: Holst, Sönke

(56) Entgegenhaltungen:
- EP-A- 1 038 429
- DE-A- 3 002 326
- US-A- 3 092 241
- US-A- 4 029 228
- US-A- 4 106 649
- US-A- 4 872 546
- US-B1- 6 248 015
- SCHULZE D ET AL: "DER FORDERVORGANG IN BIEGSAMEN SCHNECKENFORDERERN" , FORDERN UND HEBEN, KRAUSSKOPF VERLAG FUR WIRTSCHAFT. MAINZ, DE, VOL. 39, NR. 3, PAGE(S) 231-235 XP000024350 ISSN: 0341-2636 * Abbildungen 1,2 *

## Beschreibung

Die Erfindung betrifft einen Mähdrescher mit einem Reinigungssystem, einem Korntank und einer Fördereinrichtung zur Befüllung des Korntanks, welche ein Befüllrohr umfasst, das eine Förderschnecke enthält und zwischen einer eingefahrenen Position und einer ausgefahrenen Position bewegbar ist.

Mähdrescher sind große landwirtschaftliche Maschinen, die verwendet werden, um Gut von einem Feld zu ernten. Nachdem das Gut mit einem Erntevorsatz geerntet ist, wird es durch einen Schrägförderer in das Innere des Mähdreschers transportiert. Eine Drescheinrichtung drischt das geerntete Gut, wobei das Korn von anderem Getreide und/oder einer Hülse getrennt wird. Danach trennt eine Trenneinrichtung das saubere Korn von dem Erntegut, das nicht Korn ist. Letzteres wird auf das Feld zurück verbracht, während Korn und mitgerissene kleine Teilchen, Spreu, einem Reinigungssystem zugeführt werden. Das Reinigungssystem reinigt das Korn und entfernt die Spreu, indem die Spreu zur Rückseite des Mähdreschers hinaus geblasen wird. Das saubere Korn wird durch einen Elevator für sauberes Korn nach oben in einen am Mähdrescher angeordneten Korntank transportiert. Der Elevator, der häufig als Paddelförderer ausgebildet ist, übergibt das saubere Korn einem Schneckenförderer mit einer in einem Rohr angeordneten Förderschnecke, die das Korn im Korntank ablegt. Eine derartige Anordnung ist beispielsweise in der WO 01/58247 A, US 4 029 228 A, US 4 106 649 A und US 6 248 015 B gezeigt.

Bei vielen Mähdreschern ist das Volumen des Korntanks veränderbar, damit er in eine platzsparende eingefahrene Position eingefahren und beim Erntevorgang zur Aufnahme eines möglichst großen Volumens in eine ausgefahrene Position ausgefahren werden kann. Bei derartigen Mähdreschern wird der den Korntank befüllende Schneckenförderer - wie auch die den Korntank erweiternden Elemente - nach oben in die ausgefahrene Position verschwenkt und nach der Ernte wieder in die eingefahrene Position nach unten verschwenkt. Der zum Verschwenken des Schneckenförderers dienende Antrieb kann auch die den Korntank erweiternden Elemente bewegen (verschwenken und/oder verschieben), wie beispielsweise in der US 4 029 228 A, US 4 106 649 A und US 6 248 015 B sowie in der nachveröffentlichten DE 100 51 096 A offenbart ist. Zum Antrieb des Schneckenförderers ist deshalb ein Antrieb erforderlich, welcher ein Verschwenken des Schneckenförderers ermöglicht. Derartige Antriebe umfassen häufig Winkelgetriebe. Um das Verschenken des Schneckenförderers zu ermöglichen, wird oft ein Kreuzgelenk zwischen Getriebe und Schnecke oder innerhalb einer zweigeteilten Schnecke verwendet. Als nachteilig sind die relativ hohen Kosten dieser Antriebe anzusehen. Außerdem haben derartige Antriebe mitunter den Nachteil, dass sie nur bei ausgefahrenem Korntank ordnungsgemäß arbeiten.

In der nachveröffentlichten DE 100 27 273 A wird ein Mähdrescher vorgeschlagen, bei dem ein Schneckenförderer mit einer flexiblen Förderschnecke den Korntank befüllt. Die Förderschnecke weist einen ersten, sich über den Boden der Siebeinrichtung erstreckenden Bereich und einen zweiten, das Korn nach oben in den Korntank fördernden Bereich auf. Eine Volumenänderung des Korntanks wird nicht offenbart.

Schneckenförderer mit flexiblen Schnecken sind an sich aus der US 3 092 241 A, DE 30 02 326 A, US 4 872 546 A und D. Schulze et al., Der Fördervorgang in biegsamen Schneckenförderern, F+H Fördern und Heben 39 (1989), No. 3, Seiten 231-235, erschienen im Krauskopf-Verlag für Wirtschaft, Mainz, DE, bekannt.

Die der Erfindung zugrunde liegende Aufgabe wird darin gesehen, für einen Mähdrescher eine zuverlässige und preisgünstige Fördereinrichtung zum Transport des Korns zu schaffen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine flexible Förderschnecke erstreckt sich von der Körnermulde des Reinigungssystems nach oben und bis zum Auslass des Befüllrohrs. Die flexible Förderschnecke erstreckt sich durch das zwischen ausgefahrener und eingefahrener Position bewegliche Befüllrohr in den Korntank. Die Förderschnecke besteht aus in sich flexiblem Material und ist biegsam.

Vorzugsweise dient diese Förderschnecke auch zum Zusammenführen des sauberen Korns in dem Reinigungssystem. Die flexible Förderschnecke erstreckt sich somit über die Breite oder Länge des Reinigungssystems, dann nach oben und schließlich durch das Befüllrohr in den Korntank.

Auf diese Weise besteht die Möglichkeit, die Förderschnecke durch einen stationären Antrieb mit einer ortsfesten Welle in Drehung zu versetzen. Ein Antrieb mit Getriebe und Kreuzgelenk oder Schwenkgetriebe, das eine Bewegung des Befüllrohrs ermöglicht, wird eingespart. Dadurch vermeidet man die Nachteile dieser Antriebe, wie hohe Gestehungskosten, hohes Gewicht und in einigen Fällen mangelhafte Betriebseigenschaften bei eingefahrenem Befüllrohr.

Das Befüllrohr ist in der Regel zwischen seiner eingefahrenen und seiner ausgefahrenen Position verschwenkbar. Denkbar wäre aber auch, es zwischen diesen Positionen zu verschieben bzw. zu teleskopieren. Dabei würde eine flexible, streckbare Förderschnecke Verwendung finden.

Bei einer bevorzugten Ausführungsform der Erfindung ist ein Korntankaufsatz zwischen einer ausgefahrenen und einer eingefahrenen Stellung beweglich. Hier bietet es sich an, das Befüllrohr und den Korntankaufsatz zu koppeln, so dass sie durch eine gemeinsame Antriebseinrichtung bewegbar sind. Die Antriebseinrichtung kann den Korntankaufsatz oder das Befüllrohr bewegen, welcher oder welches mit dem jeweils anderen zu bewegenden Element gekoppelt ist und seine Bewegung bewirkt.

Obwohl es grundsätzlich denkbar wäre, die im Befüllrohr angeordnete Förderschnecke von ihrem oberen, im Inneren des Korntanks angeordneten Ende her anzutreiben, beispielsweise durch einen Hydraulik- oder Elektromotor, ist es bevorzugt, wenn die Förderschnecke durch eine ortsfeste Welle angetrieben wird, die am gegenüberliegenden (unteren) Ende der Förderschnecke angeordnet ist.

Wegen der Verwendung einer flexiblen Förderschnecke besteht die Möglichkeit, die Welle horizontal anzuordnen, obwohl das Befüllrohr schräg nach oben verläuft. Eine horizontale Welle ist besonders einfach antreibbar, da keine Winkelgetriebe o. ä. erforderlich sind.

In den Zeichnungen sind zwei nachfolgend näher beschriebene Ausführungsbeispiele dargestellt. Es zeigt:
- Fig. 1: eine halbschematische Ansicht eines landwirtschaftlichen Mähdreschers von der rechten Seite, in dem eine erste, wegen der sich nicht von der Reinigung bis in den Korntank erstreckenden Förderschnecke nicht unter den Anspruch 1 fallende Ausführungsform einer Fördereinrichtung zur Befüllung des Korntanks verwirklicht ist,
- Fig. 2: eine perspektivische Ansicht des Korntankaufsatzes in seiner ausgefahrenen Position, in der die Förderschnecke sichtbar ist,
- Fig. 3: eine vergrößerte, schematische Frontansicht des Paddel-Elevators und der sich in der ausgefahrenen Position befindlichen Förderschnecke,
- Fig. 4: eine vergrößerte, schematische Seitenansicht des Paddel-Elevators und des Übergangsgehäuses,
- Fig. 5: eine vergrößerte, schematische Frontansicht des Paddel-Elevators und der in der eingefahrenen Position befindlichen Förderschnecke,
- Fig. 6: eine perspektivische Ansicht eines Mähdreschers mit einer zweiten, erfindungsgemäßen Ausführungsform einer Fördereinrichtung zur Befüllung des Korntanks, und
- Fig. 7: eine Frontansicht der Fördereinrichtung zur Befüllung des Korntanks des Mähdreschers aus Figur 6.

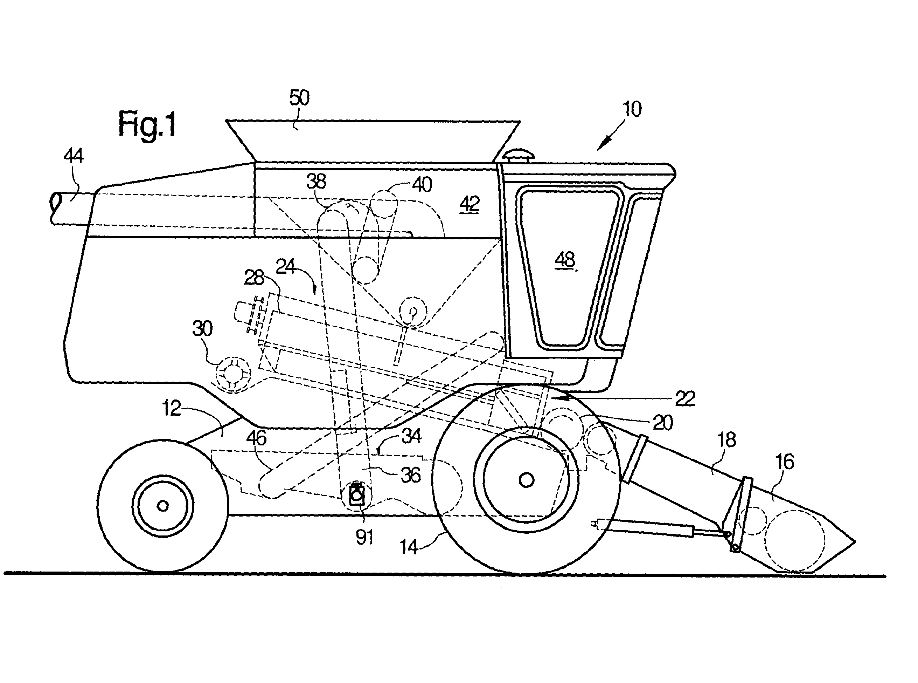

Die Figur 1 zeigt einen landwirtschaftlichen Mähdrescher 10 mit einem Chassis 12 und sich von diesem erstreckenden Bodenlaufrädern 14. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter. Die Axialtrennvorrichtung 24 ist zwischen Seitenwänden des Mähdreschers 10 angeordnet. Die Seitenwände stellen ein Teil des Chassis 12 dar. Obwohl die Erfindung als an einem Axialmähdrescher angebracht beschrieben wird, kann sie auch an anderen Mähdreschern mit einem Elevator für sauberes Korn und/oder einem Überkehrelevator verwendet werden, wie an konventionellen Strohschüttler-Mähdreschern. Den nachfolgenden Ausführungen ist voranzustellen, dass sich im Folgenden Richtungsangaben, wie vorn, hinten, oben und unten auf die Vorwärtsbewegungsrichtung des Mähdreschers 10 beziehen.

Die Axialtrennvorrichtung 24 umfasst ein axiales Rotorgehäuse 26 und einen im Rotorgehäuse 26 angeordneten axialen Rotor 28. Das geerntete Gut tritt durch den Einlassübergangsbereich 22 in das Rotorgehäuse 26 ein. Der Rotor 28 ist mit einem Beschickungsabschnitt, einem Dreschabschnitt und einem Trennabschnitt versehen. Das Rotorgehäuse 26 weist einen entsprechenden Beschickungsteil, einen Dreschteil und einen Trennteil auf. Beide Gutbearbeitungsabschnitte des Rotors 28, der Dreschabschnitt und der Trennabschnitt, sind mit Gutmitnehmerzusammenbauten ausgestattet. Der Dreschabschnitt des Rotorgehäuses 26 ist mit einem Dreschkorb ausgestattet und der Trennabschnitt mit einem Rost versehen. Korn, einschließlich ungedroschener Getreideähren, Spreu und anderes Erntegutmaterial werden aus der Erntegutmatte gelöst und fallen durch den Dreschkorb und das Rost in ein Reinigungssystem 34. Größeres Erntegutmaterial wird an der Rückseite der Axialtrennvorrichtung 24 durch eine Abgabetrommel 30 ausgestoßen.

Wie in Figur 1 dargestellt, werden durch den Dreschkorb und das Rost fallendes Korn und Spreu in das Reinigungssystem 34 geleitet, das die Spreu von den Körnern entfernt. Das Reinigungssystem 34 ist mit einem Gebläse ausgestattet, das Spreu zur Rückseite des Mähdreschers 10 herausbläst. Das schwerere saubere Korn wird durch einen quer eingebauten Schneckenförderer für sauberes Korn einem Paddel-Elevator 36 für sauberes Korn zugeführt. Der Paddel-Elevator 36 leitet das Korn aufwärts in ein Übergangsgehäuse 38, in dem das Korn einer Förderschnecke 40 zum Beladen eines Korntanks 42 für sauberes Korn zugeführt wird. Das Korn wird aus dem Korntank 42 durch einen Entladeschneckenförderer 44 entfernt. Der Betrieb des Mähdreschers 10 wird von der Bedienerkabine 48 aus gesteuert.

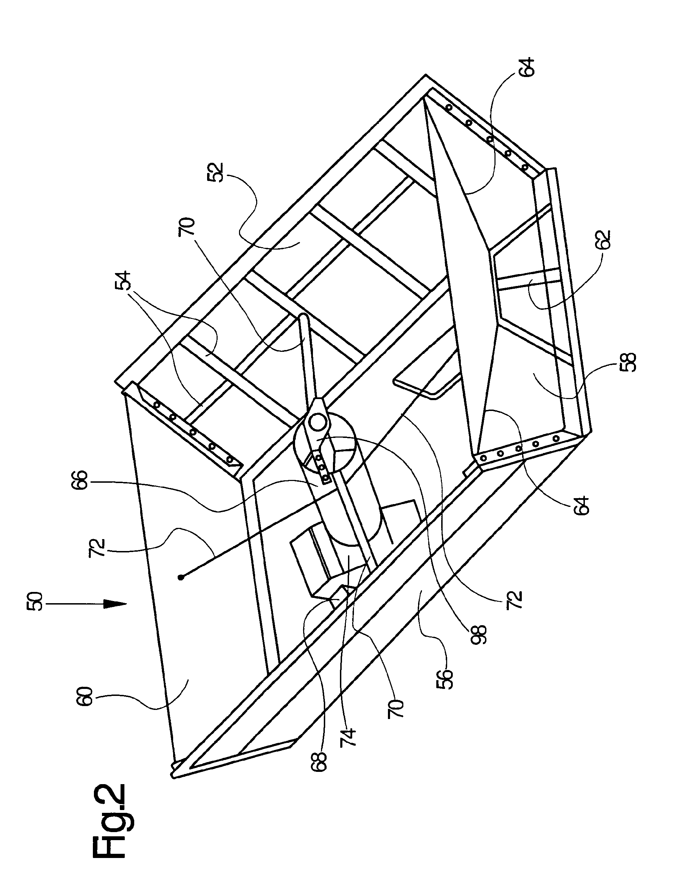

An der Oberseite des nach oben offenen Korntanks 42 ist ein Korntankaufsatz 50 angebracht. In den Figuren 1 und 2 ist der Korntankaufsatz 50 in seiner ausgefahrenen Position, d. h. seiner Betriebsstellung dargestellt. Der Korntankaufsatz 50 umfasst eine in Vorwärtsfahrtrichtung des Mähdreschers 10 vordere Wand 52, die aus in sich starrem Material hergestellt ist, in der dargestellten Ausführungsform aus mit quer und längs verlaufenden Rippen 54 verstärktem Blech. Der Korntankaufsatz 50 weist außerdem eine hintere Wand 56 auf, die mit der vorderen Wand 52 identisch ist. Zu den beiden Seiten des Mähdreschers 10 hin ist der Korntankaufsatz 50 mit Seitenwänden 58 und 60 aus flexiblem Material versehen, z. B. gummiertem Gewebe. Die Seitenwände 58, 60 sind an ihren seitlichen Enden mit der vorderen Wand 52 und der hinteren Wand 56 und am unteren Rand mit der Wand des Korntanks 42 verbunden. Die vordere Wand 52 und die hintere Wand 56 sind an ihren Unterseiten um horizontale, quer zur Fahrtrichtung des Mähdreschers 10 verlaufende Achsen schwenkbar an den Wänden des Korntanks 42 befestigt. Die vordere Wand 52, die hintere Wand 56 und die Seitenwände 58, 60 bilden in der Betriebsstellung somit einen trichterartigen, ringförmigen und nach oben offenen Behälter.

An den Außenflächen der Seitenwände 58, 60 aus flexiblem Material ist jeweils ein Stützelement 62 in Form eines nach unten geöffneten Bogens mit einer mittleren, senkrechten Querstrebe angeordnet (das der linken Seitenwand 60 zugeordnete Stützelement ist in Figur 2 nicht sichtbar), das in der Form eines aus Rohren zusammengefügten Rahmens aufgebaut ist. Die Stützelemente 62 stützen die Seitenwände 58 bzw. 60 nach außen ab und verhindern eine übermäßige Belastung der Seitenwände 58, 60. Die Stützelemente 62 sind durch an den Außenflächen der Seitenwände 58, 60 anliegende Seile 64 mit den oberen Ecken der vorderen Wand 52 und der hinteren Wand 56 verbunden. Die Seile 64 dienen ebenfalls zur Abstützung der Seitenwände 58, 60 und begrenzen den Schwenkweg der vorderen Wand 52, der hinteren Wand 56 und der Stützelemente 62. Die Stützelemente 62 sind an ihren unteren Enden um horizontale, parallel zur Fahrtrichtung des Mähdreschers 10 verlaufende Achsen schwenkbar an der Wand des Korntanks 42 angelenkt. Sie sind - zwecks Abstützung der Seitenwände 58, 60 - aber nur maximal um 90° nach oben, jedoch nicht weiter verschwenkbar. Die Länge der Seile 64 ist durch geeignete Verstellelemente einstellbar, so dass sie gleichmäßig gespannt sind.

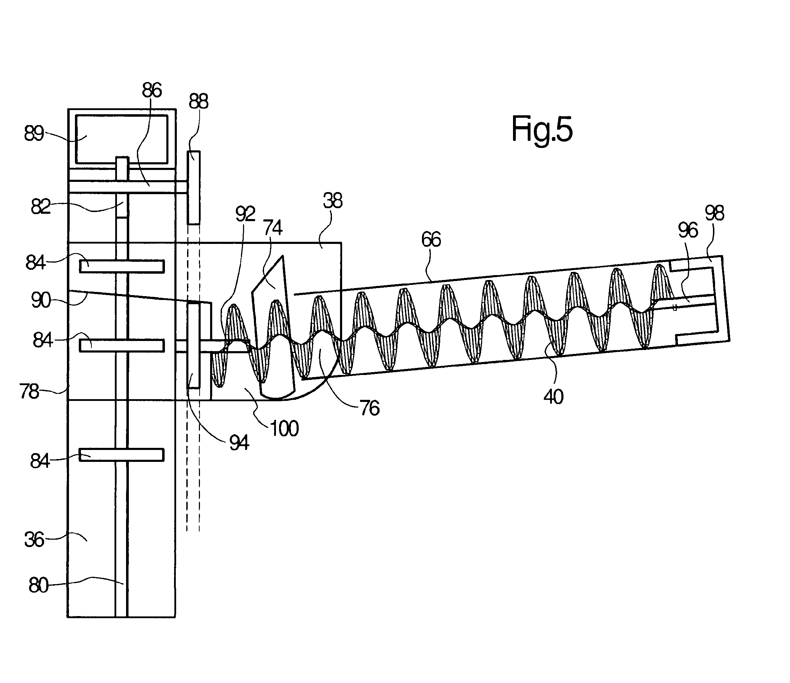

Ein die Förderschnecke 40 enthaltendes Befüllrohr 66 ist im Inneren des Korntanks 42 angeordnet und transportiert den ausgedroschenen Gutanteil vom Reinigungssystem 34 in den Korntank 42. Das Befüllrohr 66 ist durch eine Antriebseinrichtung 68, die einen Hydraulik- oder Elektromotor umfasst, zwischen einer in Figur 2 gezeigten ausgefahrenen Position, in der sich das Befüllrohr 66 um einen Winkel von etwa 45° nach oben erstreckt, und einer eingefahrenen Position verschwenkbar, in der das Befüllrohr 66 nach unten in den Innenraum des Korntanks 42 hinein abgesenkt ist und sich nur noch um etwa 20° nach oben erstreckt, wie anhand der Figur 5 erkennbar ist. In der ausgefahrenen Position ist die Auslassöffnung am oberen Ende des Befüllrohres 66 innerhalb des von den Seitenwänden 52, 56, 58 und 60 des Korntankaufsatzes 50 gebildeten Rings angeordnet. Der Korntankaufsatz 50 kann somit bis zum oberen Rand mit Erntegut gefüllt werden.

Das Befüllrohr 66 ist durch jeweils ein stangenförmiges, Zug- und Druckkräfte übertragendes Verbindungselement 70 mit der vorderen Wand 52 und der hinteren Wand 56 verbunden. Das Verbindungselement 70 ist durch geeignete Gelenke am Befüllrohr 66 und der jeweiligen Wand 52, 56 angelenkt. Wird das Befüllrohr 66 durch die Antriebseinrichtung 68 von der in Figur 2 dargestellten ausgefahrenen Position in die eingefahrene Position verbracht, so bewirken die Verbindungselemente 70, dass die vordere Wand 52 und die hintere Wand 56 in Richtung auf das Innere des Korntanks 42 zu einschwenken. Durch die mit der vorderen Wand 52 bzw. hinteren Wand 56 verbundenen, sich nunmehr entspannenden Seile 64 werden die Stützelemente 62 nach innen geklappt, unterstützt durch Seile 72, die jeweils zwischen einer Seitenwand 58, 60 und dem Befüllrohr 66 gespannt sind. Dadurch werden die Seitenwände 58, 60 eingefaltet. Die Seile 72 sind mit den Stützelementen 62 verbunden und stützen sie und die Seitenwände 58, 60 in der Betriebsstellung ab, was sich insbesondere dann als sinnvoll erweist, wenn der Korntankaufsatz 50 befüllt ist.

Die vordere Wand 52 und die hintere Wand 56 bilden in der Außerbetriebsstellung einen geschlossenen Deckel für den Korntank 42, der ihn und die Seitenwände 58, 60 vor Umwelteinflüssen schützt.

Das Verbringen des Korntankaufsatzes 50 in die ausgefahrene Position erfolgt analog. Das Befüllrohr 66 wird durch die Antriebseinrichtung 68 angehoben, so dass die Verbindungselemente 70 die vordere Wand 52 und die hintere Wand 56 um etwa 120° aufschwenken, bis die Seile 64 gespannt sind. Durch die sich spannenden Seile 64 werden die Stützelemente 62 etwa um 90° nach außen in die Betriebsposition verschwenkt. Die Seile 64 begrenzen auch den Schwenkweg der Stützelemente 62. Die Seitenwände 58, 60 sind durch geeignete Befestigungsmittel mit den Stützelementen 62 verbunden, so dass auch sie in die Betriebsstellung gelangen.

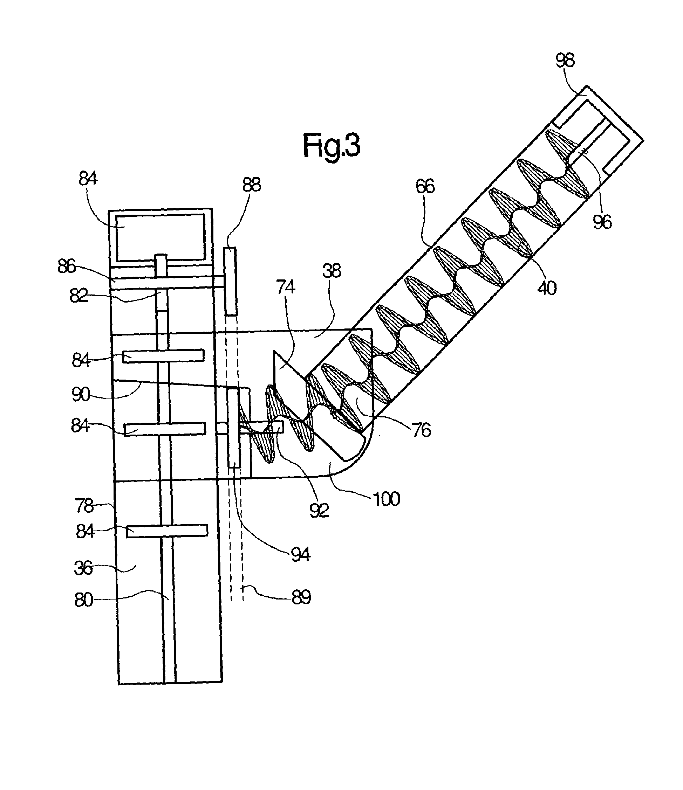

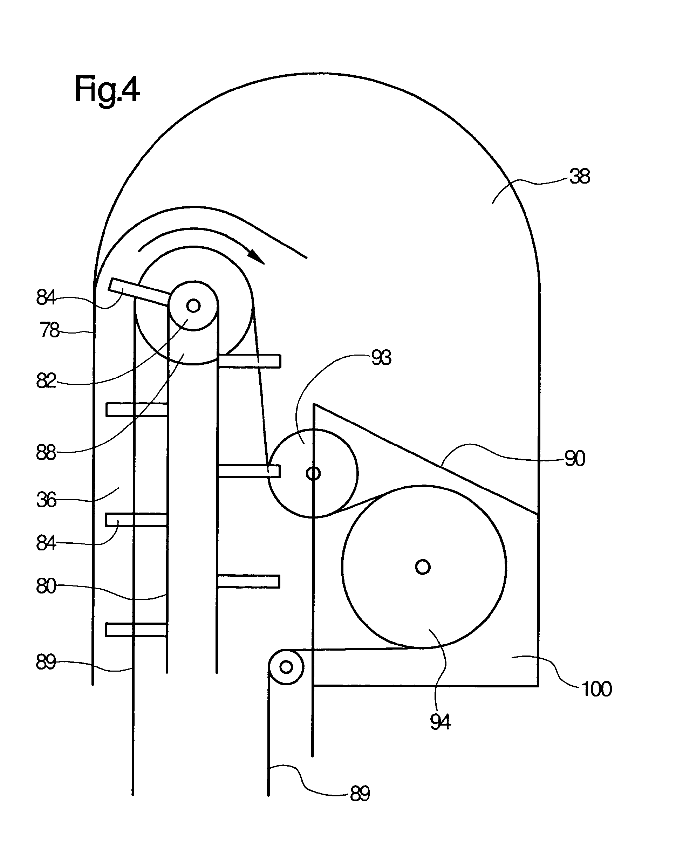

Das Befüllrohr 66 ist an seinem unteren Ende an einer Schwenkhalterung 74 angebracht, die mit der Antriebseinrichtung 68 gekoppelt ist. In der Figur 3, die eine seitliche Ansicht des Paddel-Elevators 36 und der Förderschnecke 40 zeigt und auf die im Folgenden Bezug genommen wird, ist angedeutet, dass die Schwenkhalterung 74 am dem ortsfesten Übergangsgehäuse 38 um eine horizontale, sich in Fahrtrichtung des Mähdreschers 10 erstreckende Schwenkachse 76 schwenkbar angelenkt und durch die Antriebseinrichtung 68 um die Schwenkachse 76 verschwenkbar ist. Die unteren und seitlichen Wände der Schwenkhalterung 74 und die unteren und seitlichen Wände des Übergangsgehäuses 38 liegen aneinander an, so dass kein Korn zwischen ihnen hindurch dringen kann. Die Figur 4 zeigt eine Seitenansicht des Übergangsgehäuses 38 und des oberen Teils des Paddel-Elevators 36.

Der Paddel-Elevator 36 umfasst ein Elevatorengehäuse 78, in dem eine Kette 80 um ein oberes Ritzel 82 und ein in Figur 3 nicht eingezeichnetes, unteres Ritzel umläuft. An der Kette 80 sind Förderpaddel 84 befestigt. Das Ritzel 82 ist auf einer horizontalen Welle 86 angeordnet, die mit einer außerhalb des Elevatorengehäuses 78 angeordneten Riemenscheibe 88 gekoppelt ist. Wie in der Figur 4 durch den Pfeil angedeutet, werfen die Förderpaddel 84 das aus dem Reinigungssystem 34 nach oben geförderte Korn nach vorn in das Übergangsgehäuse 38 aus. An der vorderen (in Figur 4 rechts eingezeichneten) Wand des Übergangsgehäuses 38 kann in an sich bekannter Weise zu Ertragskartierungszwecken eine Prallplatte zur Gutdurchsatzmessung angeordnet sein. Das aus dem Elevatorengehäuse 78 nach vorn und unten ausgeworfene Korn erreicht über ein nach vorn und zur Mitte des Mähdreschers 10 hin geneigtes Leitblech 90 einen durch das Übergangsgehäuse 38 gebildeten Leerraum 100, in dem der untere, linke Bereich der Förderschnecke 40 angeordnet ist.

Die Förderschnecke 40 ist aus flexiblem und biegsamen Material hergestellt und nicht mit einem mittigen Kern versehen. Sie kann daher in Kurven verlegt werden und das Korn um Biegungen befördern. Derartige Förderschnecken 40 ermöglichen eine materialschonende Förderung und sind beispielsweise von der Fa. Wildfellner, Österreich, erhältlich.

An ihrem in Figur 3 links eingezeichneten, unteren Ende ist die Förderschnecke 40 mit einer horizontal angeordneten, im Übergangsgehäuse 38 gelagerten Welle 92 verbunden, die die Wand des Übergangsgehäuses 38 durchdringt und mit einer außerhalb des Übergangsgehäuses 38 angeordneten Riemenscheibe 94 verbunden ist. Die mit der Förderschnecke 40 gekoppelte Riemenscheibe 94 und die Riemenscheibe 88 für das obere Ritzel 82 des Paddel-Elevators 36 werden durch einen gemeinsamen Riemen 89 angetrieben, der von einem Antrieb 91 (sh. Figur 1) im unteren Bereich des Paddel-Elevators 36 her angetrieben wird. Der Riemen 89 wird durch mindestens eine geeignete Riemenscheibe 93 umgelenkt und gespannt. Die Förderschnecke 40 ist an ihrem oberen Ende mit einer mittigen, koaxial zum Befüllrohr 66 verlaufenden Achse 96 gekoppelt, die drehbar an einer im wesentlichen U-förmigen Querstrebe 98 gelagert ist, welche ihrerseits an der Oberseite des Befüllrohrs 66 angebracht ist. Auf diese Weise ist die Förderschnecke 40 an ihren beiden Enden gelagert und wird durch die Welle 92 in Rotation versetzt, so dass sie das vom Paddel-Elevator 36 ausgeworfene Korn in den Korntank 42 verbringt. Etwa in der Nähe des äußeren, rechten Endes der Welle 92 kann eine Führung für die Förderschnecke 40 vorgesehen sein. Sie kann aus einem Ring, Rohrbogen oder Rundeisentraggerüst bestehen, welche der Förderschnecke 40 eine Abstützung gegenüber Biegemomenten bereitstellen.

Die flexible Förderschnecke 40 ermöglicht es, das Befüllrohr 66 durch die Antriebseinrichtung 68 zwischen der in Figur 3 gezeigten ausgefahrenen Position, in der der Korntankaufsatz 50 aufgeklappt ist, und der in Figur 5 dargestellten eingefahrenen Position, in der auch der Korntankaufsatz 50 eingeklappt ist, zu verschwenken. Ein verschwenkbares Getriebe zum Antrieb der Förderschnecke 40 erübrigt sich. Die Förderschnecke 40 ist sowohl in der ausgefahrenen Position als auch in der eingefahrenen Position antreibbar, so dass auch mit geschlossenem Korntankaufsatz 50 geerntet werden kann.

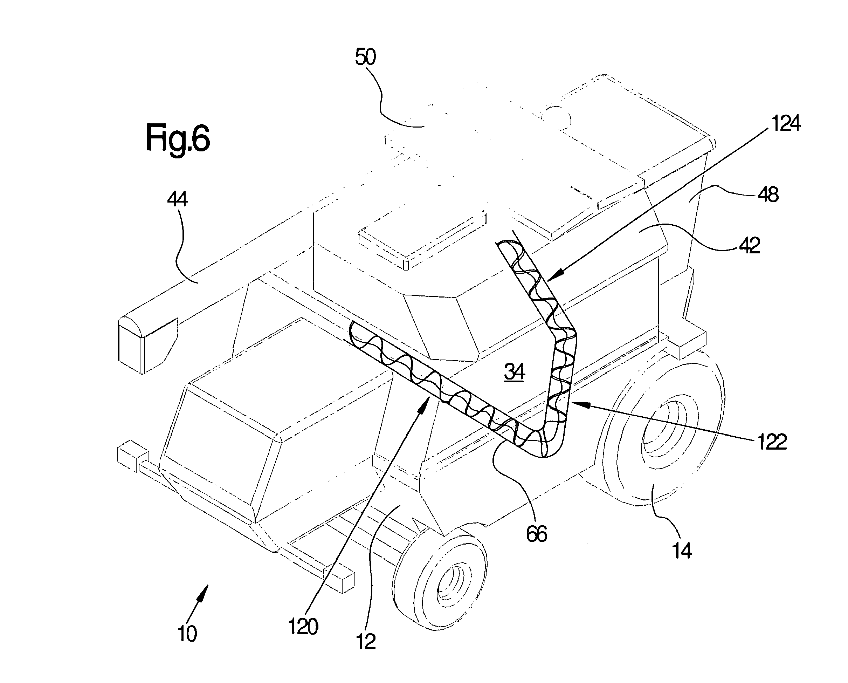

Eine zweite erfindungsgemäße Ausführungsform einer Fördereinrichtung zur Befüllung des Korntanks ist in dem in Figur 6 dargestellten Mähdrescher 10 verwirklicht. Bis auf die Einrichtungen zur Befüllung des Korntanks 42 stimmen die Elemente des in Figur 6 dargestellten Mähdreschers 10 mit den Elementen des in Figur 1 gezeigten Mähdreschers 10 überein. Zum Befüllen des Korntanks 42 des in Figur 6 dargestellten Mähdreschers 10 ist eine aus drei Abschnitten 120, 122 und 124 aufgebaute Fördereinrichtung vorgesehen. Der erste Abschnitt 120 erstreckt sich am Boden des Reinigungssystems 34 über die Breite des Mähdreschers 10. Der zweite Abschnitt 122 erstreckt sich an der in Fahrtrichtung rechten Seite des Chassis 12 vom rechten Ende des ersten Abschnitts 120 etwa vertikal nach oben und endet im unteren Bereich des Korntanks 42. Der dritte Teil 124 schließt sich an den zweiten Teil 122 an und bildet das Befüllrohr 66 für den Korntank 42. Eine innerhalb zylindrischer Rohre angeordnete flexible Förderschnecke 40 erstreckt sich durch den ersten Abschnitt 120, den zweiten Abschnitt 122 und den dritten Abschnitt 124.

Die Förderschnecke 40 ist an ihrem ersten, unteren Ende mit einer koaxialen Welle 128 verbunden, die in einer Lagerung 130 abgestützt ist und auf der der Förderschnecke 40 gegenüberliegenden Seite mit einer Riemenscheibe 132 verbunden ist, die zum rotativen Antrieb der Förderschnecke 40 dient. An ihrem oberen Ende ist die Förderschnecke 40 mit einer koaxialen Achse 134 verbunden, die in einer Querstrebe 136 gelagert ist, welche am oberen Ende des Befüllrohrs 66 befestigt ist.

Der erste Abschnitt 120 der Fördereinrichtung ist ein quer eingebauter Schneckenförderer für sauberes Korn, der wie sein Äquivalent in der Ausführungsform nach Figur 1 das im Reinigungssystem 34 gewonnene saubere Korn zusammenführt bzw. weiterfördert.

Der erste Abschnitt geht über einen Bogen 126 in den zweiten Abschnitt 122 über, welcher sich vertikal nach oben in den Korntank 42 erstreckt.

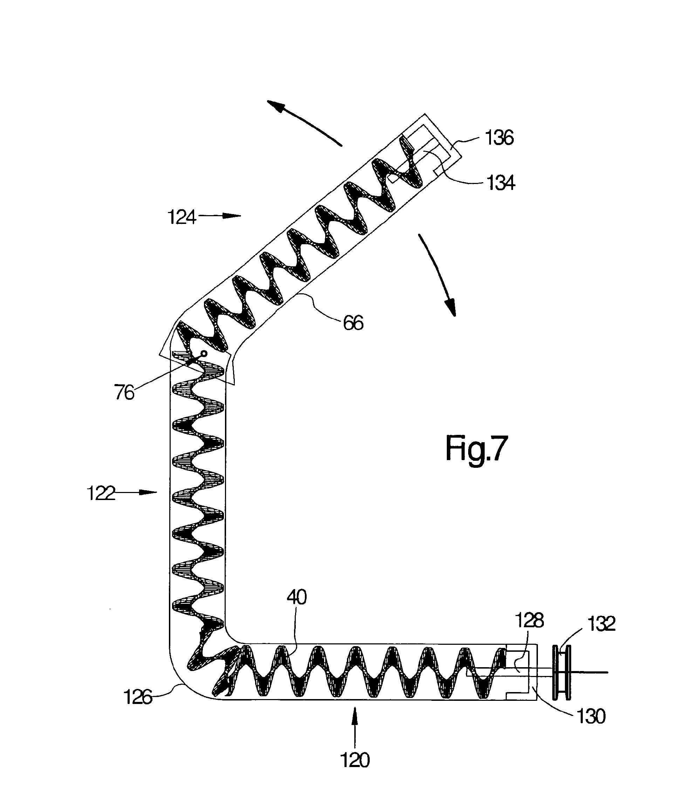

Am oberen Ende des zweiten Abschnitts 122 ist der dritte Abschnitt 124 schwenkbar angebracht. Der dritte Abschnitt 124 der Fördereinrichtung wird durch das Befüllrohr 66 mit dem darin angeordneten Teil der Förderschnecke 44 realisiert. Das Befüllrohr 66 ist am oberen Ende des zweiten Abschnitts 122 schwenkbar angelenkt. Wie durch die Pfeile angedeutet ist, kann es durch einen geeigneten Antrieb, der in Figur 6 und 7 aus Gründen der Übersichtlichkeit nicht eingezeichnet ist, um eine horizontale Achse 76 zwischen einer eingefahrenen und einer ausgefahrenen Position verschwenkt werden, analog den in den Figuren 3 und 5 dargestellten Positionen des Befüllrohrs 66. Der Antrieb kann auch den Korntankaufsatz 50 bewegen. Dabei ist die Form des unteren Endes des Befüllrohrs 66 derart sich trichterförmig konisch erweiternd gewählt, das ein korndichter Übergang zwischen dem zweiten Abschnitt 122 und dem dritten Abschnitt 124 der Fördereinrichtung zur Befüllung des Korntanks 42 gewährleistet ist. Anstelle eines derartigen Übergangs könnte aber auch der Übergangsbereich zwischen dem zweiten Abschnitt 122 und dem dritten Abschnitt 124 oder sogar das ganze Befüllrohr 66 in sich flexibel sein, um ein Verschwenken des Befüllrohrs 66 zwischen Betriebs- und Außerbetriebsposition zu ermöglichen.

Die zweite Ausführungsform der Fördereinrichtung zur Befüllung des Korntanks 42 mit der vom Reinigungssystem 34 bis in den Korntank 42 durchgehenden, einteiligen flexiblen Förderschnecke 40 hat gegenüber der ersten Ausführungsform den Vorteil, dass sie noch weiter vereinfacht und deshalb preiswert realisierbar ist.

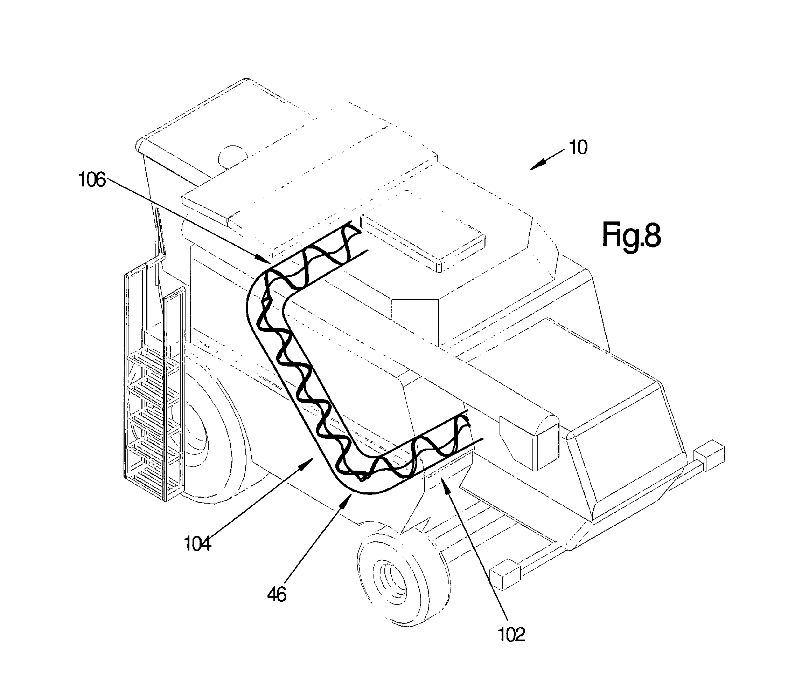

Nicht durch die Siebe (Rost und Dreschkorb) fallendes Korn, ungedroschene Getreideähren und anderes Erntegutmaterial wird durch einen ersten Teil 102 eines Überkehrförderers 46 gesammelt, der sich über die Breite des Reinigungssystems 34 erstreckt. Die Figur 8, in der ein Mähdrescher wiedergegeben ist, welcher dem in Figur 1 dargestellten entspricht, zeigt, dass der Überkehrförderer 46 eine einteilige, flexible Förderschnecke 110 umfasst, die sich stromab ihres am Boden des Reinigungssystems 34 angeordneten ersten Teils 102 in einem zweiten Teil 104, der in einem Rohr angeordnet ist, schräg nach vorn und oben erstreckt und an der Oberseite des schräg nach oben und vorn verlaufenden Rohrs wieder in einem dritten Teil 106, der innerhalb eines Rohrs angeordnet ist, zur Mitte des Mähdreschers 10 verläuft. Der Überkehrförderer 46 speist die Überkehr wieder in die Axialtrennvorrichtung 24 ein. Die flexible Förderschnecke 110 des Überförderers 46 wird an ihrem unteren und/oder oberen Ende angetrieben. Sie erspart die Getriebe, die bei bekannten Überkehrförderern, die aus drei separaten Schnecken und/oder Paddelelevatoren aufgebaut sind, erforderlich sind. Bei einem konventionellen Schüttlermähdrescher würde die Überkehr wieder der Dreschtrommel zugeführt. Analog würde sie bei einem Mähdrescher mit quer angeordneter Dreschtrommel und nachfolgenden axialen Trennrotoren wieder der Dreschtrommel zugeführt.

## Patentansprüche

1. Mähdrescher (10) mit einem Reinigungssystem (34), einem Korntank (42) und einer Fördereinrichtung zur Befüllung des Korntanks (42), welche ein Befüllrohr (66) umfasst, das eine Förderschnecke (40) enthält und zwischen einer eingefahrenen Position und einer ausgefahrenen Position bewegbar ist, **dadurch gekennzeichnet, dass** die Förderschnecke (40) flexibel ist und sich vom Reinigungssystem (34) bis zum Auslass des Befüllrohrs (66) im Korntank (42) erstreckt.

2. Mähdrescher (10) nach Anspruch 1, **dadurch gekennzeichnet, dass** die Förderschnecke (40) durch eine ortsfeste Welle (128) antreibbar ist.

3. Mähdrescher (10) nach Anspruch 1 oder 2, **dadurch gekennzeichnet, dass** das Befüllrohr (66) um eine horizontale Achse (76) zwischen der eingefahrenen Position und der ausgefahrenen Position verschwenkbar ist.

4. Mähdrescher (10) nach einem der Ansprüche 1 bis 3, **dadurch gekennzeichnet, dass** ein Korntankaufsatz (50) zwischen einer eingefahrenen Position und einer ausgefahrenen Position bewegbar und mit dem Befüllrohr (66) gekoppelt ist.

5. Mähdrescher (10) nach einem der Ansprüche 2 bis 4, **dadurch gekennzeichnet, dass** die Welle (128) zumindest näherungsweise horizontal angeordnet ist.

6. Mähdrescher (10) nach einem der Ansprüche 1 bis 5, **dadurch gekennzeichnet, dass** die Förderschnecke (40) einen sich über die Breite oder Länge des Reinigungssystems (34) erstreckenden Abschnitt (120) aufweist, der sauberes Korn fördert.

## Claims

1. Combine harvester (10) having a cleaning system (34), a grain tank (42) and a conveyor for filling the grain tank (42), which conveyor comprises a filling pipe (66) that contains an auger (40) and is movable between a retracted position and an extended position, **characterized in that** the auger (40) is flexible and extends from the cleaning system (34) to the outlet of the filling pipe (66) in the grain tank (42).

2. Combine harvester (10) according to Claim 1, **characterized in that** the auger (40) can be driven by a fixed shaft (128).

3. Combine harvester (10) according to Claim 1 or 2, **characterized in that** the filling pipe (66) is pivotable about a horizontal axis (76) between the retracted position and the extended position.

4. Combine harvester (10) according to one of Claims 1 to 3, **characterized in that** a grain tank mounting (50) is movable between a retracted position and an extended position and is coupled with the filling pipe (66).

5. Combine harvester (10) according to one of Claims 2 to 4, **characterized in that** the shaft (128) is disposed at least approximately horizontally.

6. Combine harvester (10) according to one of Claims 1 to 5, **characterized in that** the auger (40) has a portion (120) which extends over the width or length of the cleaning system (34) and conveys clean grain.

## Revendications

1. Moissonneuse-batteuse (10), comportant un système de nettoyage (34), un réservoir à grains (42) et un dispositif de transport pour le remplissage du réservoir à grains (42), lequel comporte un tube de remplissage (66) qui contient une vis de transport (40) et est mobile entre une position escamotée et une position extraite, **caractérisée en ce que** la vis de transport (40) est flexible et s'étend depuis le système de nettoyage (34) jusqu'à la sortie du tube de remplissage (66) dans le réservoir à grains (42).

2. Moissonneuse-batteuse (10) selon la revendication 1, **caractérisée en ce que** la vis de transport (40) est apte à être actionnée par un arbre (128) localement fixe.

3. Moissonneuse-batteuse (10) selon la revendication 1 ou 2, **caractérisée en ce que** le tube de remplissage (66) est apte à pivoter autour d'un axe horizontal (76) entre la position escamotée et la position extraite.

4. Moissonneuse-batteuse (10) selon l'une quelconque des revendications 1 à 3, **caractérisée en ce qu'**un chapeau (50) du réservoir à grains est apte à être déplacé entre une position escamotée et une position extraite et est couplé au tube de remplissage (66).

5. Moissonneuse-batteuse (10) selon l'une quelconque des revendications 2 à 4, **caractérisée en ce que** l'arbre (128) est disposé au moins à peu près horizontalement.

6. Moissonneuse-batteuse (10) selon l'une quelconque des revendications 1 à 5, **caractérisée en ce que** la vis de transport (40) comporte une partie (120), qui s'étend sur toute la largeur ou longueur du système de nettoyage (34) et qui transporte des grains propres.
